# EUROPÄISCHE PATENTANMELDUNG

(11) **EP 1 439 325 A2**
(43) Veröffentlichungstag der Anmeldung: **21.07.2004**
(21) Anmeldenummer: 03029258.5
(22) Anmeldetag: 18.12.2003
(51) Int. Cl.: F16H 15/38

(54) **Reibradgetriebe, insbesondere Toroidgetriebe mit mechanisch gekoppelten Reibrollen**

(30) Priorität: 15.01.2003 DE 10301160
(71) Anmelder: Bayerische Motoren Werke Aktiengesellschaft, 80809 München (DE)
(72) Erfinder: Wolf, Lothar, 81539 München (DE); Ginglas, Eduard, 86199 Augsburg (DE); Ohnemus, Ulrich, 82285 Hattenhofen (DE)

(57) **Zusammenfassung**

Reibradgetriebe (1) mit einem Getriebevariator, der durch eine Antriebsscheibe (6,6'), eine Abtriebsscheibe (7,7') und Reibrollen (18-20) gebildet ist, welche zwischen der Antriebsscheibe (6,6') und der Abtriebsscheibe (7,7') angeordnet und zur Drehmomentübertragung von der Antriebsscheibe (6,6') auf die Abtriebsscheibe (7,7') vorgesehen sind, wobei die Reibrollen (18-20) jeweils an einem zugeordneten Halteelement (21-23) gelagert sind. Die Halteelemente (21-23) mit den daran angeordneten Reibrollen (18-20) sind zur Verstellung der Übersetzung des Toroidgetriebes (1) in ihrer räumlichen Stellung verstellbar angeordnet und über eine Kopplungseinrichtung miteinander gekoppelt, die bei einer Übersetzungsverstellung eine gleichzeitige Verstellung aller Reibrollen (18-20) sicherstellt. Die Kopplungseinrichtung ist ein mechanischer Kopplungsmechanismus.

## Beschreibung

Die vorliegende Erfindung betrifft ein Reibradgetriebe, insbesondere Toroidgetriebe gemäß dem Oberbegriff des Patentanspruches 1.

Ein derartiges Reibrad bzw. Toroidgetriebe ist aus der EP 0832 376 B1 bekannt.

Ein Toroidgetriebe weist üblicherweise einen Getriebevariator auf, der durch eine toroidförmige Antriebsscheibe, eine toroidförmige Abtriebsscheibe sowie üblicherweise drei Reibrollen gebildet ist, die zwischen der Antriebsscheibe und der Abtriebsscheibe angeordnet sind. Die Antriebsscheibe und die Abtriebsscheibe werden in Axialrichtung durch einen "Normalkraftsteller" zusammengedrückt. Dies ermöglicht eine Drehmomentübertragung von der Antriebsscheibe über die Reibrollen auf die Abtriebsscheibe. Die Reibrollen sind in Umfangsrichtung gesehen in einem Abstand von 120° voneinander angeordnet. Sie sind jeweils an einem Halteelement gelagert. Die Halteelemente sind üblicherweise als Lagergabeln ausgebildet. Jedem Halteelement ist ein Verschiebeaktuator zugeordnet. Durch Verschieben der Reibrollen zwischen der Antriebsscheibe und der Abtriebsscheibe kann "aktiv" die Stellung der Reibrollen und somit die Übersetzung des Getriebes verändert werden. In Abhängigkeit von dem zwischen der Antriebsscheibe und der Abtriebsscheibe zu übertragenden Drehmoment und der von den Verschiebeaktuatoren auf die Reibrollen ausgeübten Kraft ergibt sich eine vordefinierte Stellung der Reibrollen.

Wie der EP 0832 376 B1 zu entnehmen ist, ist jede der Reibrollen über ein gabelförmiges Halteelement und den zugeordneten Verschiebeaktuator im Getriebegehäuse fixiert. Die gabelförmigen Halteelemente stehen dabei schräg über den Umfang der Antriebsscheibe und der Abtriebsscheibe nach außen hervor und haben bei einer symmetrischen Anordnung in Umfangsrichtung gesehen einen Abstand von circa 120°. Eine symmetrische Anordnung der drei Reibrollenaktuatoren ist zwar kinematisch günstig, beansprucht aber sehr viel Bauraum und scheidet somit für viele Anwendungen, insbesondere im Fahrzeugbereich aus.

Deshalb wurden platzsparendere Anordnungen der drei Reibrollenaktuatoren erwogen. Platzsparender ist es beispielsweise, wenn die Aktuatoren so angeordnet werden, dass bei einer Verstellung der Reibrollen zwei der drei Aktuatoren mit Druck beaufschlagt werden und der andere mit Zug oder umgekehrt. Die Aktuatoren müssen dann entsprechend kraftgekoppelt sein, was zum Beispiel durch eine hydraulische Steuerung möglich ist. Bei einer derartigen Anordnung besteht jedoch die Gefahr, dass die Aktuatoren aufgrund der asymmetrischen Anordnung gegensinnig schwingen, was problematisch werden kann. Insgesamt bleibt festzuhalten, dass bei einer asymetrischen Anordnung die Lage der Aktuatoren im Getriebegehäuse hinsichtlich Toleranzen, Fertigungs- und Montageaufwand nicht optimal ist. Des weiteren ergeben sich verschiedene problematische Effekte, die hier nur stichpunktartig erwähnt werden sollen, nämlich:
- Es ergibt sich eine ungleiche Aufteilung der Reibrollen-Abstützkräfte an den Kugelgelenkpunkten zwischen den Haltegabeln und den Aktuatorelementen in eine Aktuator-Längskraft und eine Aktuator-Querkraft;
- An den einzelnen Reibrollen ergeben sich unterschiedliche Schlupfund Nutzreibwerte. Insgesamt ist das übertragbare Variatordrehmoment geringer als bei einer symmetrischen Anordnung;
- Schließlich ergeben sich Wirkungsgradverluste;

Aufgabe der Erfindung ist es, ein Reibradgetriebe, insbesondere ein Toroidgetriebe zu schaffen, bei dem die Reibrollenansteuerung einen kompakten Aufbau aufweist und regelungstechnisch gut beherrschbar ist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Die Erfindung geht von einem Reibradgetriebe, insbesondere einen Toroidgetriebe mit einem Getriebevariator aus, der durch eine Antriebsscheibe, eine Abtriebsscheibe und Reibrollen gebildet ist, die zwischen der Antriebsscheibe und der Abtriebsscheibe angeordnet sind und die zur Drehmomentübertragung von der Antriebsscheibe auf die Abtriebsscheibe vorgesehen sind. Die Reibrollen sind jeweils an einem zugeordneten Halteelement gelagert. Die Halteelemente mit den daran angeordneten Reibrollen sind so im Getriebegehäuse angeordnet, dass die räumliche Stellung der Reibrollen aktiv, d.h. durch eine Getriebesteuerung verstellbar ist. Durch die Veränderung der räumlichen Stellung der Reibrollen kann die Übersetzung des Reibradgetriebes verändert werden. Zur Sicherstellung einer simultanen Verstellung aller Reibrollen ist eine Kopplungseinrichtung vorgesehen.

Der Kern der Erfindung besteht darin, dass die Kopplungseinrichtung ein mechanischer Kopplungsmechanismus ist. Unter dem Begriff "mechanischer Kopplungsmechanismus" ist zu verstehen, dass die Halteelemente über mechanische Bauteile, zum Beispiel einen Hebelmechanismus miteinander verbunden sind, der eine gleichzeitige Bewegung der einzelnen Halteelemente bzw. Reibrollen sicherstellt. Die Halteelemente, an denen die einzelnen Reibrollen gelagert sind, sind über den Kopplungsmechanismus mechanisch zwangsgekoppelt. Es ist eine "aktive" Verstellung der Übersetzung möglich oder eine "passive" Verstellung.

Für die Darstellung eines solchen mechanischen Kopplungsmechanismus sind verschiedene Ausführungsformen denkbar, die im Zusammenhang mit den Figuren näher erläutert werden. Es zeigen:
- Figur 1: den grundsätzlichen Aufbau eines Toroidgetriebes mit zwei Toroidgetriebeeinheiten (Cavities);
- Figur 2: die kinematischen Verhältnisse an einer Reibrolle im stationären Zustand;
- Figur 3: die kinematischen Verhältnis an einer Reibrolle im instationären Zustand;
- Figur 4: die kinematischen Verhältnis an einer Reibrolle nach erneuter Einstellung eines stationären Zustandes;
- Figur 5: ein erstes Ausführungsbeispiel, bei dem die Halteelemente, an denen die Reibrollen befestigt sind, relativ zu einem im Getriebegehäuse fest angeordneten ringförmigen Trägerkörper verschwenkbar sind;
- Figur 6, 7: ein Ausführungsbeispiel, bei dem der Kopplungsmechanismus durch ein Planetengetriebe gebildet ist;
- Figur 8, 9: ein weiteres Ausführungsbeispiel mit einem ringförmigen Trägerkörper, bei dem die Halteelemente der Reibrollen mittels Kardangelenken gelagert sind;
- Figur 10, 11: ein Ausführungsbeispiel mit einem ringförmigen Trägerkörper, bei dem das Zentralelement über eine separate Steuerstange angesteuert ist;
- Figur 12: ein Ausführungsbeispiel mit einem Getriebegehäuse fest angeordneten Zentralelement;
- Figur 13: ein Ausführungsbeispiel, bei dem die Halteelemente der Reibrollen unmittelbar im ringförmigen Trägerkörper und im Zentralelement gelenkig gelagert sind.

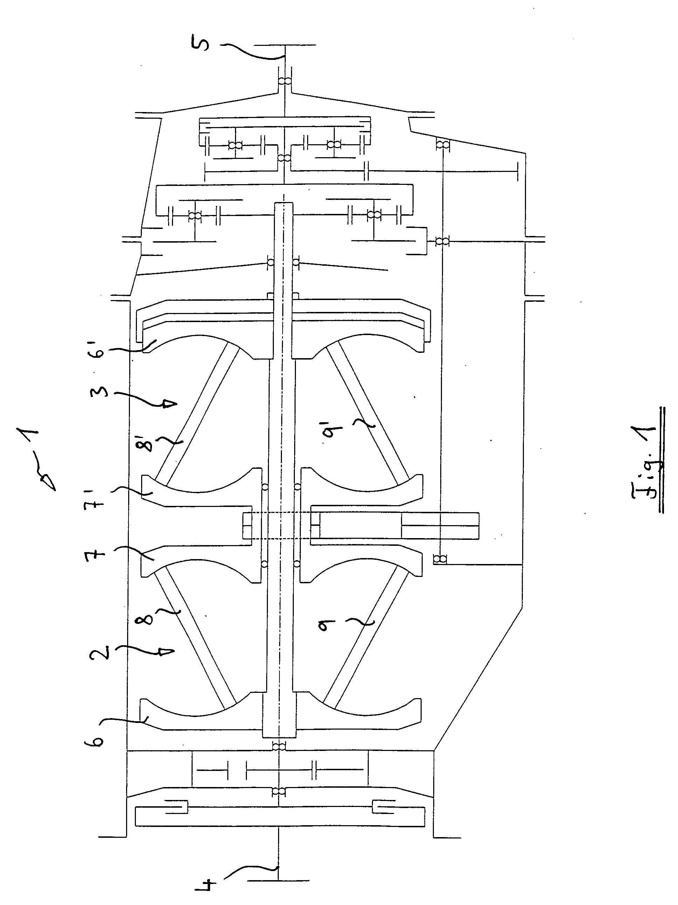

**Figur 1** zeigt den Aufbau eines Toroidgetriebes 1 mit zwei Toroidgetriebeeinheiten 2, 3 die im folgenden auch als "Cavities" bezeichnet werden. Das Toroidgetriebe 1 weist einen mit dem Motor (nicht dargestellt) zu verbindenden Getriebeeingang 4 und einen Getriebeausgang 5 auf. Die Toroidgetriebeeinheiten 2, 3 weisen jeweils eine Antriebsscheibe 6, 6' eine Abtriebsscheibe 7, 7' sowie Reibrollen 8, 9 bzw. 8', 9' auf, die zwischen der zugeordneten Antriebsscheibe 6, 6' und der Abtriebsscheibe 7, 7' angeordnet sind. Auf weitere Einzelheiten des in **Figur 1** dargestellten Toroidgetriebes braucht im Zusammenhang mit der vorliegenden Erfindung nicht explizit eingegangen werden.

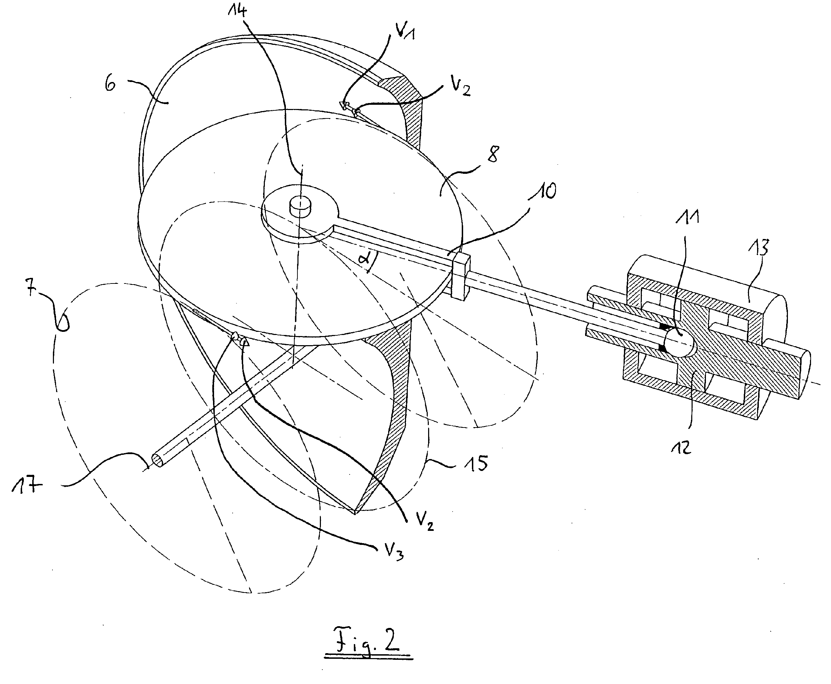

In **Figur 2** ist exemplarisch eine der Reibrollen des Toroidgetriebes dargestellt, die hier mit der Bezugsziffer 8 bezeichnet ist und die zwischen der gestrichelt angedeuteten Antriebsscheibe 6 und der Abtriebsscheibe 7 angeordnet ist. Die Antriebsscheibe 6 hat eine Umfangsgeschwindigkeit V1, die etwas größer als die Umfangsgeschwindigkeit V2 der Reibrolle 8 ist. Die Abtriebsscheibe 7 wiederum hat im Berührpunkt mit der Reibrolle 8 eine Umfangsgeschwindigkeit V3, die etwas geringer als die Umfangsgeschwindigkeit V2 der Reibrolle 8 ist. Antriebsseitig und abtriebsseitig tritt also jeweils ein Schlupf auf. Der Schlupf auf der Antriebsseite beträgt V1-V2. Der Schlupf auf der Abtriebsseite beträgt V2 - V3.

Die Reibrolle 8 ist über eine Haltegabel 10 und ein Kugelgelenk 11 mit einem Kolben 12 verbunden, der verschieblich in einem doppelt wirkenden Zylinder 13 angeordnet ist.

Wesentlich für die Funktionsfähigkeit des Toroidgetriebes ist, dass die Reibrolle 8 Freiheitsgrade besitzt, die es ermöglichen, dass sich die räumliche Stellung der Reibrolle 8 so einstellen kann, dass die Drehachse 14 der Reibrolle 8 sich mit der Variatorachse 17 schneiden kann bzw. der auf dem Torusmittelkreis 15 der Antriebsscheibe 6 bzw. der der Mittelpunkt der Reibrolle 8 auf dem Torusmittenkreis 15 zu liegen kommt, wie es in Figur 2 dargestellt. Eine derartige Stellung der Reibrolle 8 ist eine stabile, stationäre Stellung.

Im normalen Fahrbetrieb wird Drehmoment von der Antriebsscheibe 6 auf die Abtriebsscheibe 7 übertragen oder im Schubbetrieb von der Abtriebsscheibe 7 auf die Antriebsscheibe 6. In beiden Fällen tritt an der Reibrolle 8 eine Reaktionskraft auf, die über die Haltegabel 10 bzw. den Doppelzylinder 13 abgestützt werden muss.

In **Figur 2** ist ein stationärer Zustand dargestellt. Stationär bedeutet hier, die auf die Reibrolle 8 wirkenden Kräfte in den beiden Kontaktpunkten mit der An- und Abtriebsscheibe 6, 7 mit der Abstützkraft, die auf die Haltegabel 10 wirkt, im Gleichgewicht stehen. Das übertragene Drehmoment ist somit zeitlich konstant.

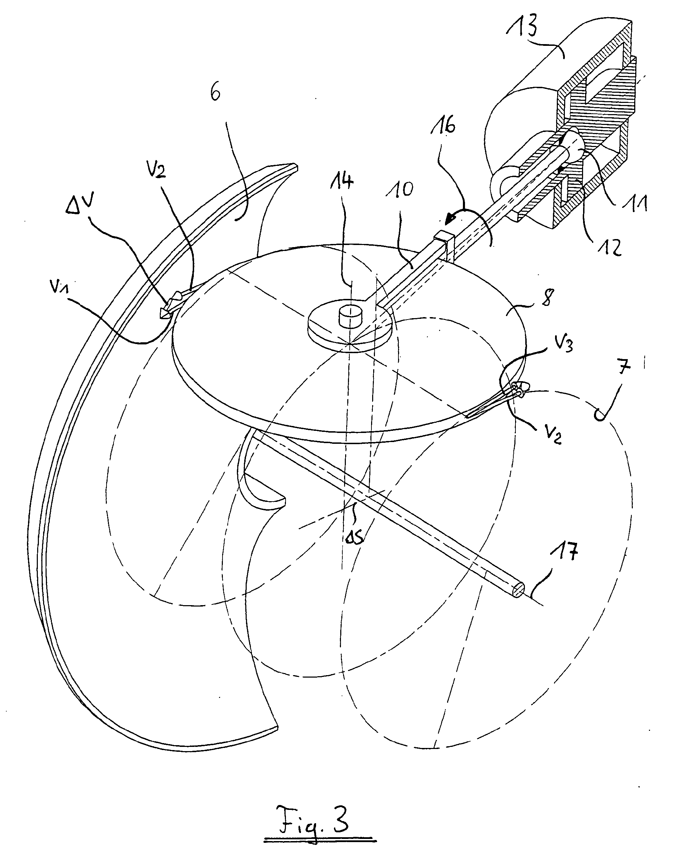

**Figur 3** zeigt einen instationären Zustand, bei dem sich das übertragene Drehmoment bzw. die Übersetzung des Toroidgetriebes zeitlich ändert. Dies ist daran zu erkennen, dass die Geschwindigkeitsvektoren V1, V2 bzw. V2, V3 nicht parallel sind. Der Differenzgeschwindigkeitsvektor ΔV auf der Antriebsseite hat eine Komponente tangential zur Umfangsrichtung der Reibrolle 8 und eine Komponente normal zur Umfangsrichtung der Reibrolle 8. Die Normalkomponente des Differenzgeschwindigkeitsvektors ΔV entspricht einem "Querschlupf" der Reibrolle 8 in Bezug auf die Abtriebsscheibe 7, was zu einem Schwenkmoment, d.h. zu einer Schwenkbewegung der Reibrolle 8 um die Längsachse der Haltegabel 10 führt. Diese Schwenkbewegung ist durch den Pfeil 16 angedeutet.

Bei einer Änderung des zu übertragenden Drehmoments bzw. bei einer Störung des Kräftegleichgewichts an der Reibrolle 8 wird diese aufgrund ihrer kinematisch bestimmten Aufhängung auf dem Torusmittenkreis 15 verschoben. Die Haltegabel 10 liegt dann nicht mehr in der Tangentialebene an den Torusmittenkreis 15.

Bei dem in **Figur 3** gezeigten instationären Zustand hat die Drehachse 14 der Reibrolle 8 einen Querversatz Δs bezüglich der Drehachse 17 des Getriebevariators. Jede Drehmomentveränderung führt, falls die resultierende Rollerabstützkraft nicht "nachgeführt" wird, zu einer Verschiebung des Kolbens 12. Aufgrund der Querkomponente des Schlupfes zwischen der Reibrolle 8 und der Antriebsscheibe 6 bzw. der Abtriebsscheibe 7 wird die Reibrolle 8 verschwenkt, bis die Querkomponente des Schlupfes Null wird, die Haltegabel 10 wieder in einer Tangentialebene an den Torusmittenkreis liegt, bzw. die Drehachse 14 der Reibrolle 8 die Variatordrehachse 17 schneidet.

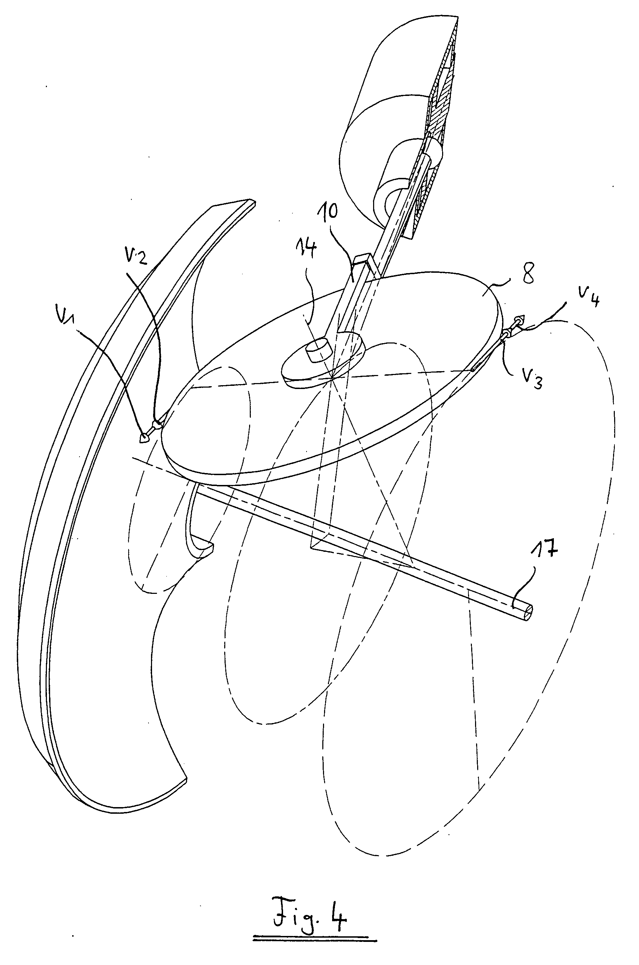

Aufgrund der Querkomponente des Schlupfes zwischen der Reibrolle 8 und der Antriebsscheibe 6 bzw. der Abtriebsscheibe 7 wird die Reibrolle 8 verdreht, bis die Querkomponente des Schlupfes Null wird und wieder ein stationärer Zustand erreicht ist, was in Figur 4 daran zu erkennen ist, dass die Geschwindigkeitsvektoren V1, V2 sowie V3 und V4 wieder parallel sind und die Drehachse 14 der Reibrolle 8 die Variatordrehachse 17 schneidet.

Die Störung des o.g. Kräftegleichgewichts an der Reibrolle 8 kann aktiv durch eine Veränderung der resultierenden Kolbenkraft ausgelöst werden, d.h. durch Betätigung der Abstützeinrichtung 13. Sie kann aber auch durch eine Veränderung des An- oder Abtriebsmomentes an den Variatorscheiben 6, 7 "von außen" aufgeprägt werden. Ein diesbezügliche kritischer Fall ist beispielsweise eine Vollbremsung des Fahrzeugs oder eine plötzliche Änderung des Abtriebsmomentes, z.B. bei Überfahren einer Glatteisstelle.

Ein instationärer Zustand kann dem Getriebe entweder "von außen" aufgeprägt sein, durch eine Drehmomentschwankung. Ein solcher Fall kann beispielsweise bei einer Fahrt auf einseitig glatter Fahrbahn auftreten, wenn ein angetriebenes Rad Slip-Stick-Verhalten aufweist und zeitweise durchrutscht. Ein instationärer Zustand kann auch aktiv herbeigeführt werden, nämlich durch Betätigung des "Tangentialkraftstellers 13", d.h. durch eine aktiv gesteuerte Änderung der Getriebeübersetzung.

Wie in **Figur 1** dargestellt, schließen die Längsachse der Haltegabel 10 und die Torusmittenebene 15 einen Winkel α ein. Dieser Winkel α wird als "Castorwinkel" bezeichnet. Bei einer Änderung der Übersetzung, das heißt bei einer Verschiebung der Haltegabel 10 in Längsrichtung ändert sich dieser Castorwinkel. Beim Übergang vom Zustand der **Figur 3** in den Zustand der **Figur 4** wird die Haltegabel 10 ausgefahren, was zu einer Verränderung des Castorwinkels führt.

Aufgrund enger Packageverhältnisse im Fahrzeugtunnel können die drei Verstellaktuatoren nicht symmetrisch im Variator angeordnet werden. Eine unsymmetrische Anordnung sowie Fertigungs- bzw. Montagetoleranzen können zu unterschiedlichen aktuellen Castorwinkeln an den Verstellaktuatoren führen. Dies und letztlich die Schwingungsfähigkeit der drei Verstellaktuatoren sowohl gleich als auch gegensinnig kann durch die erfindungsgemäße mechanische Kopplung der Aufhängungen vermieden werden. Die Abstützung der Tangentialkräfte, die auf die Reibrolle übertragen werden, erfolgt nicht in der Rollermittenebene. Somit ergeben sich unterschiedlich große Kontaktnormalkräfte an der An- bzw. Abtriebsscheibe. Aus Gründen der Sicherheit gegen Durchrutsche müssen die Antriebsscheibe und die Abtriebsscheibe daher mit einer gewissen "Überpressung" zusammen gedrückt werden, um sicherzustellen, dass die Kontaktnormalkraft an jeder Reibrolle hinreichend groß ist.

Dieser Problematik wird gemäß der Erfindung durch einen mechanischen Kopplungsmechanismus abgeholfen, was im Folgenden näher erläutert wird.

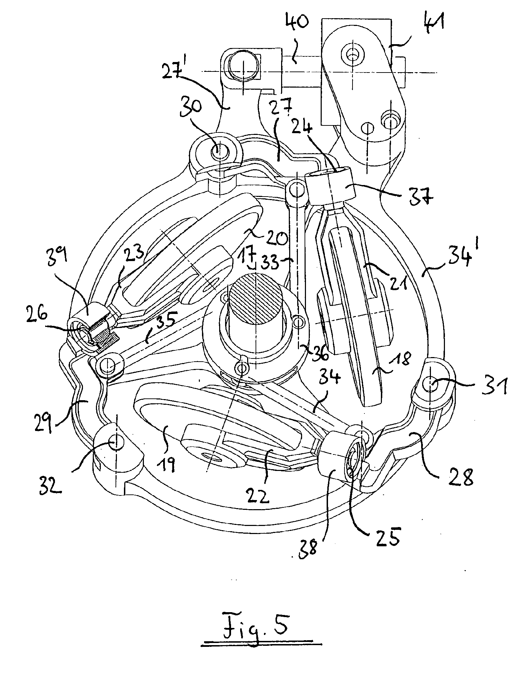

**Figur 5** zeigt ein erstes Ausführungsbeispiel eines Kopplungmechanismus. Das Toroidgetriebe weist drei Reibrollen 18 - 20 auf, die jeweils an einer Haltegabel 21 - 23 gelagert sind. Die Haltegabeln 21 - 23 sind jeweils über ein zugeordnetes Kugelgelenk 24 - 26 mit Anlenkhebeln 27 - 29 verbunden. Die Anlenkhebel 27 - 29 sind jeweils über ein Schwenkgelenk 30 - 32 an einem ringförmigen Trägerkörper 34' schwenkbar befestigt. Die Anlenkhebel 27 - 29 sind jeweils über eine zugeordnete Kopplungsstange 33 - 35 mit einem Zentralelement 36 verbunden, das in der Mitte des Trägerkörpers 34' angeordnet ist und das relativ zum Trägerkörper 34' um die Getriebevariatorachse 17 drehbar ist.

Wie am besten am Kugelgelenk 26 zu sehen ist, sind die Kugelgelenkaußenkörper fest in den Anlenkhebeln 27-29 angeordnet, können aber durch eine Einstellvorrichtung, z.B. durch Beilegen von Scheiben in Längsrichtung, in ihrer axialen Lagezuordnung zum Anlenkhebel eingestellt werden. Die Haltegabeln weisen also die Kugelgelenks- und Bewegungsfreiheitsgrade auf.

Der Anlenkhebel 27 weist hier einen zweiten Arm 27' auf, der über eine Betätigungsstange 40 mit einem Aktuator 41 verbunden ist. Der Aktuator 41 ist am ringförmigen Trägerkörper 34' befestigt. Durch Betätigen des Aktuators 41 kann der Umlenkhebel 27, 27' um das Schwenkgelenk 30 verschwenkt werden. Die Schwenkbewegung wird über die Kopplungsstange 33 auf das Zentralelement 36 und von dort über die Kopplungsstangen 34, 35 auf die Reibrollen 19, 20 übertragen. Die Reibrolle 18 ist bei dem hier gezeigten Ausführungsbeispiel über das Kugelgelenk 24 unmittelbar mit dem Anlenkhebel 27 gekoppelt. Die Halteelemente 21 - 23 bzw. die zugeordneten Reibrollen 18 - 20 sind somit kinematisch über einen Kopplungsmechanismus miteinander gekoppelt. Somit ist eine gleichmäßige, simultane Bewegung aller drei Reibrollen sichergestellt.

Die Anordnung weist darüber hinaus eine sehr kompakte Bauweise auf, da die Reibrollen 18 - 20 innerhalb des ringförmigen Trägerkörpers 34' angeordnet sind und zur Betätigung lediglich ein Aktuator erforderlich ist und nicht wie beim Stand der Technik jeweils ein Aktuator pro Reibrolle.

Selbstverständlich können alternativ dazu zwei oder drei Aktuatoren vorgesehen sein, die dann jeweils an den Anlenkhebeln 27 - 29 angreifen. Alternativ dazu könnte auch ein Zentralaktuator vorgesehen sein, der unmittelbar am Zentralelement 36 angreift.

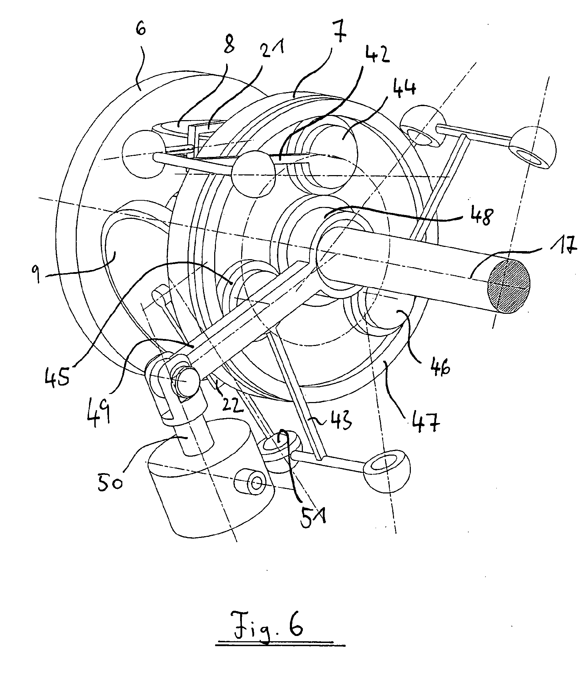

**Figur 6** zeigt ein Ausführungsbeispiel, bei dem die Kopplungseinrichtung durch ein Planetengetriebe gebildet ist. Analog zu Figur 1 sind die Reibrollen 8, 9 zwischen einer Antriebsscheibe und einer Abtriebsscheibe angeordnet.

Die Reibrollen 8, 9 sind jeweils über eine zugeordnete Haltegabel 21, 22 und eine Verbindungsstange 42, 43 mit zugeordneten Planetenrädern 44 - 46 verbunden. Die Planetenräder 44 - 46 kämmen jeweils mit einem fest in Bezug auf ein nicht dargestelltes Getriebegehäuse angeordnetes Hohlrad 47 und einem drehbar bezüglich der Variatordrehachse 17 angeordneten Sonnenrad 48. Das Sonnenrad 48 ist über einen Aktuatorhebel 49 mit einem Aktuator 50 verbunden. Durch Betätigen des Aktuators 50 kann das Sonnenrad 48 verdreht werden. Eine Verdrehung des Sonnenrades 48 führt zu einem Abrollen der Planetenräder 44 - 46 im Hohlrad 47 und somit zu einem Verschwenken der Haltegabeln 21, 22.

Vollständigkeitshalber sei noch darauf hingewiesen, dass die Haltegabel 21, 22 jeweils über Kugelgelenke 51 mit den Verbindungsstangen 43 verbunden sind.

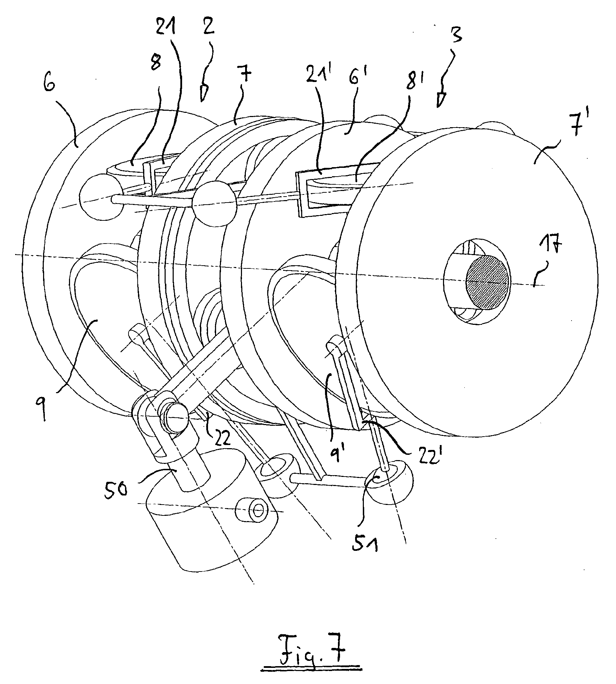

**Figur 7** zeigt das Ausführungsbeispiel der Figur 6, jedoch mit zwei Toroidgetriebeeinheiten 2, 3, die jeweils durch eine Antriebsscheibe 6, 6' und eine Abtriebsscheibe 7, 7' gebildet sind.

Die Haltegabeln 21, 22 bzw. 21', 22' sind hier also durch einen einzigen Planetengetriebemechanismus und einen einzigen Aktuator 50 verstellbar.

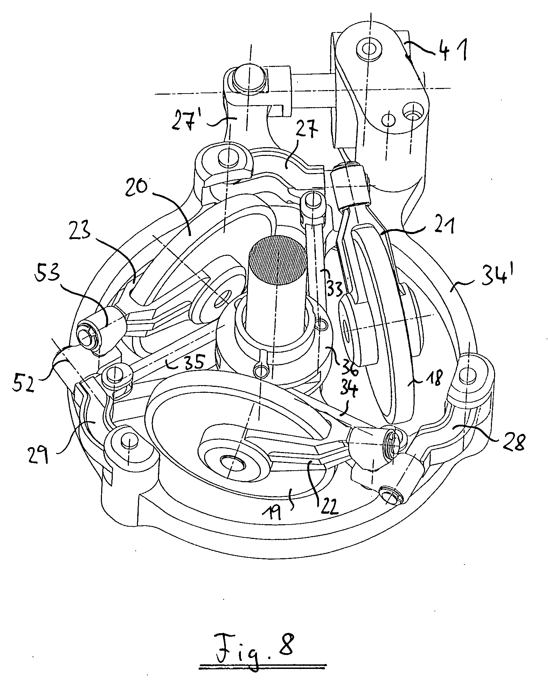

**Figur 8** zeigt eine Variante des Ausführungsbeispiel der **Figur 5**. Im Unterschied zur Figur 5 sind hier die Haltegabeln 21 - 23 jeweils über ein Kardangelenk mit dem zugeordneten Anlenkhebel 27 - 29 verbunden. Jedes der Kardangelenke besteht aus einem Quergelenk 52 und einem Längsgelenk 53.

Die Längsgelenke sind in ihrer axialen Lagezuordnung zum Anlenkhebel über eine Einstellvorrichtung verschiebbar festgelegt. Somit ist auch durch eine kardanische Aufhängung der Haltegabeln 21 - 23 eine zwangskraftfreie Führung der Reibrollen 18 - 20 gewährleistet.

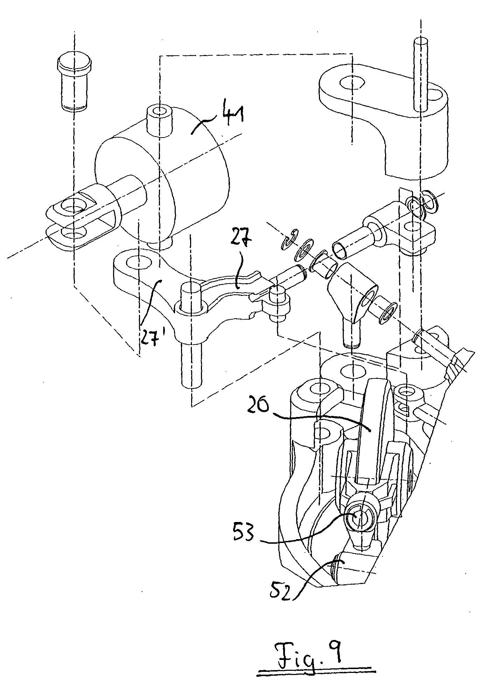

**Figur 9** zeigt Einzelheiten des Kopplungsmechanismus im Bereich des Anlenkhebels 27, 27'.

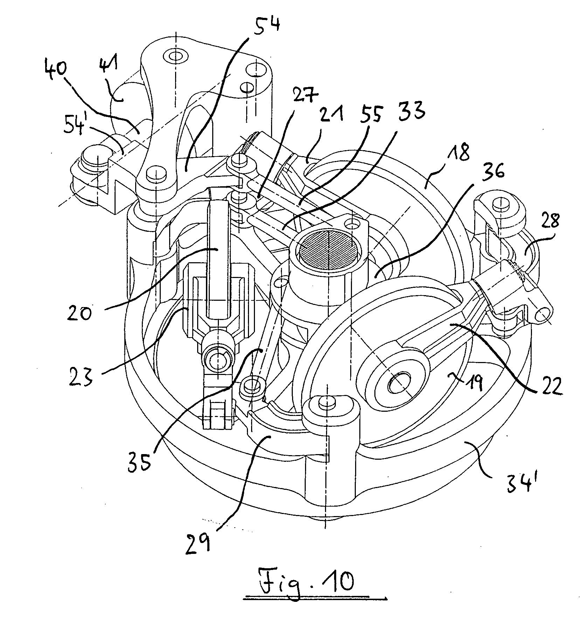

**Figur 10** zeigt eine weitere Variante des Ausführungsbeispiel der **Figur 1**. Ähnlich wie bei Figur 7, 8 sind die Haltegabeln 21 - 23 jeweils über Kardangelenke mit den Anlenkhebeln 27 - 29 verbunden. Alternativ dazu könnten auch wie beim Ausführungsbeispiel der **Figur 5** Kugelgelenke vorgesehen sein. Im Unterschied zu **Figur 5** ist hier jedoch der Anlenkhebel 27 ausschließlich zur Lagerung der Haltegabel 21 vorgesehen und nicht zur unmittelbaren Krafteinleitung vom Aktuator 41. Der Aktuator 41 ist hier über die Betätigungsstange 40 mit einem zweiarmigen Betätigungshebel 54, 54' gekoppelt, der am Trägerkörper 34' schwenkbar gelagert ist. Der Betätigungshebel 54, 54' ist über eine separate Betätigungsstange 55 mit dem Zentralelement 36 verbunden. Vom Zentralelement 36 führen dann die Kopplungsstangen 33 - 35 zu dem jeweiligen Anlenkhebel 27 - 29.

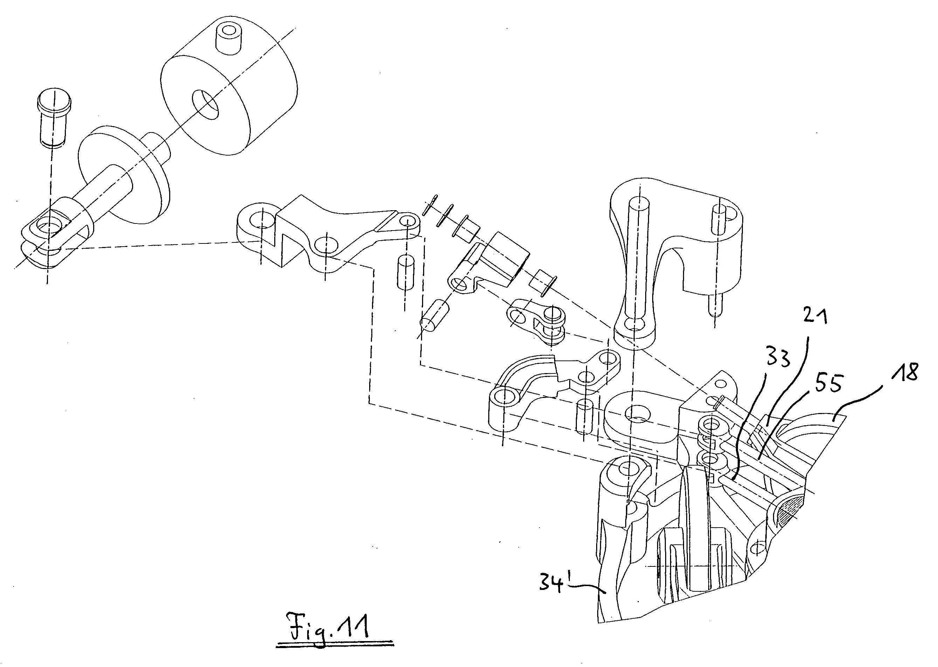

**Figur 11** zeigt Einzelheiten des Ausführungsbeispiels der **Figur 10** im Bereich der Kopplungsstangen 33, 55.

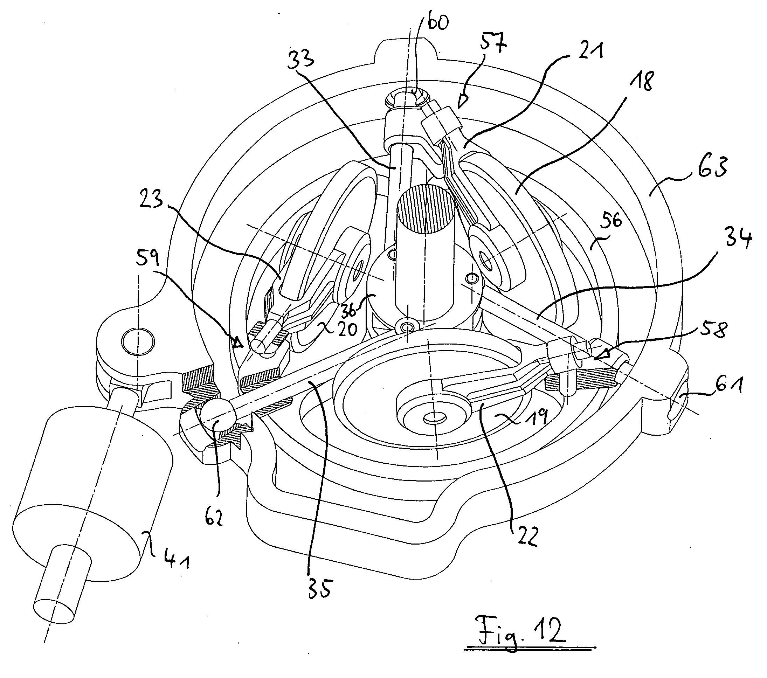

**Figur 12** zeigt ein Ausführungsbeispiel, bei dem das Zentralelement 36 mit einem ringförmigen Innenkörper 56, der als Trägerkörper fungiert, drehfest verbunden ist. Am Zentralelement 36 sind Kopplungsstangen 33 - 35 gelenkig angeordnet, die radial schräg nach außen führen. Das Zentralelement 36 ist von dem ringförmigen Innenkörper 56 umgeben, welcher über Kardangelenke 57 - 59 mit den Haltegabeln 21 - 23 der Reibrollen 18 - 20 verbunden ist. Die Kopplungsstangen 33 - 35 durchsetzen den ringförmigen Innenkörper und sind relativ dazu verschieblich. An den äußeren Enden der Kopplungsstangen 33 - 35 sind Kugelgelenke 60 - 62 angeordnet, die zusätzlich zu den Kugelgelenksfreiheitsgraden einen Verschiebungsfreiheitsgrad in Radialrichtung aufweisen. Die Kugelgelenkpfannen sind längsverschieblich bzw. radial verschieblich in einem ringförmigen Außenkörper 63 angeordnet.

Das in **Figur 12** gezeigte Ausführungsbeispiel funktioniert folgendermaßen. Bei einer Betätigung des Aktuators 41 wird der ringförmige Außenkörper 63 verdreht. Drehachse ist die Variatorachse. Die Drehbewegung wird über die Kopplungsstangen 33 - 35 und die Kardangelenke 57-59 in die geforderte Verstellbewegung der Haltegabeln 21 - 23 umgewandelt. Mit dieser Verstellbewegung wird die aktive Änderung der Getriebeübersetzung an den Reibrollen bewirkt.

Alternativ zu dem gezeigten Ausführungsbeispiel können auch hier anstatt der Kardangelenke 57 - 59 Kugelgelenke eingesetzt werden.

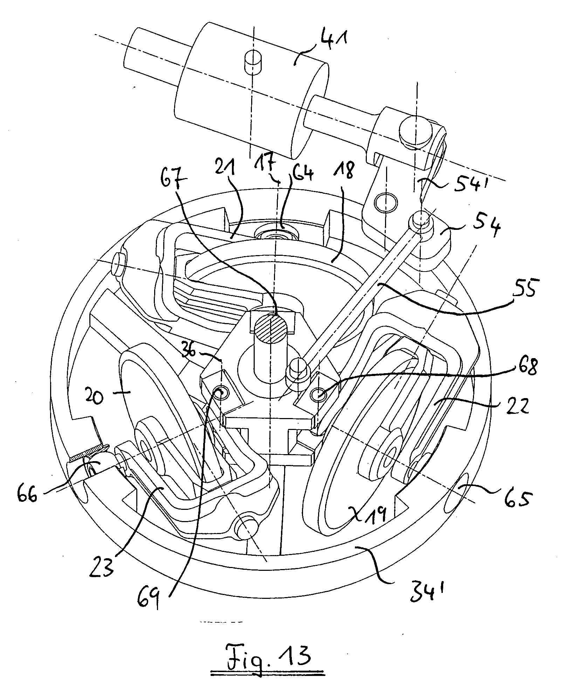

**Figur 13** zeigt eine Variante des Ausführungsbeispiels der **Figur 5**. Hier ist das Zentralelement 36 wiederum verdrehbar angeordnet. Die Haltegabeln 21 - 23 sind jeweils über ein Kugelgelenk 64 - 66 radial verschieblich im ringförmigen Trägerelement 34' gelagert. Die Innenseiten der Haltegabeln 21 - 22 sind jeweils über ein Schwenkgelenk 67 - 69 mit den Zentralelement 36 verbunden. Die Schwenkgelenke 67 - 69 sind dabei jeweils radial verschieblich mit dem Zentralelement 36 verbunden. Zur Übersetzungsverstellung ist ein Aktuator 41 vorgesehen, der über einen Aktuatorhebel 54, 54' und eine Betätigungsstange 55 mit dem Zentralelement 36 gekoppelt ist. Durch Betätigen des Aktuators 41 kann das Zentralelement 36 verdreht werden, was ein Verschwenken der Haltegabeln 21 - 23 ermöglicht.

## Patentansprüche

1. Reibradgetriebe, insbesondere Toroidgetriebe (1) für Fahrzeuge, mit einem Getriebevariator, der durch eine Antriebsscheibe (6, 6'), eine Abtriebsscheibe (7, 7') und Reibrollen (18 - 20) gebildet ist, welche zwischen der Antriebsscheibe (6, 6') und der Abtriebsscheibe (7, 7') angeordnet und zur Drehmomentübertragung von der Antriebsscheibe (6, 6') auf die Abtriebsscheibe (7, 7') vorgesehen sind, wobei die Reibrollen (18 - 20) jeweils an einem zugeordneten Halteelement (21 - 23) gelagert sind, und die Halteelemente (21 - 23) mit den daran angeordneten Reibrollen (18 - 20) zur Verstellung der Übersetzung des Toroidgetriebes in ihrer räumlichen Stellung verstellbar angeordnet sind und über eine Kopplungseinrichtung miteinander gekoppelt sind, die bei einer Übersetzungsverstellung eine gleichzeitige Verstellung aller Reibrollen (18 - 20) sicherstellt,
**dadurch gekennzeichnet, dass**
die Kopplungseinrichtung ein mechanischer Kopplungsmechanismus ist.

2. Reibradgetriebe (1) nach Anspruch 1, wobei ein fest im Getriebegehäuse angeordneter ringförmiger Trägerkörper (34') vorgesehen ist und die Halteelemente (21 - 23) mit den daran angeordneten Reibrollen (18 - 20) im Innenbereich des ringförmigen Trägerkörpers (34') angeordnet und relativ dazu bewegbar sind und dass der Kopplungsmechanismus ein Zentralelement (36) aufweist, das in der Mitte des ringförmigen Trägerkörpers (34') angeordnet und um eine Drehachse (17) des Getriebevariators drehbar ist, wobei die Halteelemente (21 - 23) gelenkig mit dem Zentralelement (36) gekoppelt sind. (Figur 5; 8, 9; 10, 11; 13)

3. Reibradgetriebe (1) nach Anspruch 2, wobei das Zentralelement (36) mit den Halteelementen (21 - 23) über je eine Kopplungsstange (33 - 35) gelenkig gekoppelt ist. (Figur 5; 8, 9; 10, 11)

4. Reibradgetriebe nach Anspruch 2 oder 3, wobei Anlenkhebel (27- 29) vorgesehen sind, die schwenkbar an dem Trägerkörper (34') angeordnet sind und wobei die Halteelemente (21 - 23) an den Anlenkhebeln (27 - 29) gelagert sind. (Figur 5; 8, 9; 10, 11)

5. Reibradgetriebe nach Anspruch 4, wobei die Halteelemente (21 - 23) über Kugelgelenke (24 - 26) an den Anlenkhebeln (27 - 29) gelagert sind. (Figur 5)

6. Reibradgetriebe nach Anspruch 4, wobei die Halteelemente (21 - 23) über Kardangelenke (52 - 53) an den Anlenkhebeln (27 - 29) gelagert sind. (Figur 8,9;10, 11;)

7. Reibradgetriebe nach einem der Ansprüche 2 bis 6, wobei ein Aktuator (41) zum Verdrehen des Zentralelements (36) vorgesehen ist.

8. Reibradgetriebe nach Anspruch 7, wobei der Aktuator (41) an einem der Anlenkhebel (27) angreift und eine Verstellbewegung von dem einen Anlenkhebel (27) über die zugeordnete Kopplungsstange (33) auf das Zentralelement (36) und vom Zentralelement (36) über die anderen Kopplungsstangen (34, 35) auf die anderen Anlenkhebel (28, 29) übertragen wird. (Figur 5; 8, 9; 10, 11;)

9. Reibradgetriebe nach Anspruch 7, wobei der Aktuator (41) an einem Aktuatorhebel (54, 54') angreift, der schwenkbar am Trägerkörper (34') angeordnet ist und dass der Aktuatorhebel (54, 54') über eine Verdrehstange (55) gelenkig mit dem Zentralelement (36) verbunden ist und eine Verstellbewegung über die Verdrehstange (55) auf das Zentralelement (36) und vom Zentralelement (36) über Kopplungsstangen auf die Anlenkhebel (27 - 29) übertragen wird. (Figur 10, 11; 13)

10. Reibradgetriebe nach Anspruch 2, wobei die Halteelemente (21 - 23) jeweils über ein inneres Gelenk (67 - 69) mit dem Zentralelement (36) und über ein äußeres Gelenk (64 - 66) mit dem Trägerkörper (34') verbunden sind. (Figur 13)

11. Reibradgetriebe nach Anspruch 10, wobei die äußeren Gelenke (64 - 66) Kugelgelenke sind, die im Trägerkörper (34') radial verschiebbar sind und die inneren Gelenke (67 - 69) Schwenkgelenke sind, deren Schwenkachsen parallel zur Getriebevariatorachse (17) sind und die im Zentralelement (36) radial verschiebbar sind. (Figur 13)

12. Reibradgetriebe nach einem der Ansprüche 7 bis 11,wobei der Aktuator (41) ein Verschiebeaktuator ist.

13. Reibradgetriebe nach einem der Ansprüche 7 bis 11, wobei der Aktuator (41) ein Drehaktuator ist.

14. Reibradgetriebe nach einem der Ansprüche 7 bis 13, wobei der Aktuator (41) unmittelbar am Zentralelement (36) angreift.

15. Reibradgetriebe nach Anspruch 1, wobei der Kopplungsmechanismus durch ein Planetengetriebe (44 - 48) gebildet ist, das ein Sonnenrad (48), ein Hohlrad (47) und Planetenräder (44 - 46) aufweist, die über einen Planetenträger miteinander verbunden sind, wobei je ein Planetenrad mittelbar oder unmittelbar mit einem der Halteelemente (21, 22) gekoppelt ist.

16. Reibradgetriebe nach Anspruch 15, wobei das Hohlrad (47) getriebegehäusefest angeordnet ist und ein Aktuator (50) zum Verdrehen des Sonnenrads (48) vorgesehen ist.

17. Reibradgetriebe nach Anspruch 1, wobei die Kopplungseinrichtung einen ringförmigen Führungskörper (56) aufweist, die Halteelemente (21- 23) mit den daran angeordneten Reibrollen (18 - 20) im Innenbereich des ringförmigen Führungskörpers (56) angeordnet und relativ dazu bewegbar sind,
der ringförmige Führungskörper (56) von einem ringförmigen Außenkörper (63) umschlossen ist, Stellstangen (33 - 35) vorgesehen sind, die gelenkig mit einem getriebegehäusefesten Zentralkörper (36) verbunden sind, der in der Mitte des ringförmigen Führungskörpers (56) angeordnet ist, wobei sich die Stellstangen (33 -35) vom Zentralkörper (36) durch Gleitlager, die im ringförmigen Führungskörper (56) vorgesehen sind, nach außen erstrecken und mittels Kugelgelenken im Außenkörper (63) gelagert sind, wobei die Kugelgelenke (60 - 62) im Außenkörper (63) radial verschiebbar sind und
ein Aktuatorelement (41) vorgesehen ist, das den Außenkörper (63) gegenüber dem Zentralkörper (36) verdreht, wobei eine Verdrehbewegung des Außenkörpers (63) über die Stellstangen (33 - 35) auf den Führungskörper (56) und vom Führungskörper (56) über die Halteelemente (21 - 23) auf die Reibrollen (18 - 20) übertragen wird. (Figur 12)
